# EUROPÄISCHE PATENTSCHRIFT

(11) **EP 3 364 053 B1**
(45) Veröffentlichungstag und Bekanntmachung des Hinweises auf die Patenterteilung: **12.08.2020**
(21) Anmeldenummer: 18154811.6
(22) Anmeldetag: 02.02.2018
(51) Int. Cl.: F16B 13/12

(54) **SPREIZDÜBEL**
EXPANSION ANCHOR
CHEVILLE À EXPANSION

(30) Priorität: 15.02.2017 DE 102017103051; 01.02.2018 DE 102018102261
(43) Veröffentlichungstag der Anmeldung: 22.08.2018
(73) Patentinhaber: fischerwerke GmbH & Co. KG, 72178 Waldachtal (DE)
(72) Erfinder: Pfau, Patrick, 72275 Alpirsbach (DE)
(74) Vertreter: Suchy, Ulrich Johannes

(56) Entgegenhaltungen:
- EP-A1- 2 251 555
- DE-A1- 19 903 457
- DE-A1-102005 030 174

## Beschreibung

Die Erfindung betrifft einen Spreizdübel mit den Merkmalen des Oberbegriffs des Anspruchs 1.

Aus der Offenlegungsschrift DE 10 2005 030 174 A1 ist ein gattungsgemäßer Spreizdübel bekannt. Der Spreizdübel weist eine Dübelhülse mit einem Aufnahmeraum auf, in den eine Gewindestange eingesteckt werden kann. Der Aufnahmeraum wird radial durch vier Spreizstege begrenzt, wobei an zwei gegenüberliegenden Spreizstegen plattenartige, zur Längsachse geneigte und kippbare Spreizelemente angeordnet sind. Die Spreizelemente bilden mit ihren radial äußeren Enden den äußeren Rand der Dübelhülse. Die äußeren Enden der Spreizelemente dienen als Halteelemente, die den Spreizdübel durch Druck gegen die Bohrlochwand in einem Bohrloch halten. Die radial inneren Enden der Spreizelemente ragen als Rastelemente in den Aufnahmeraum, wo sie Teile eines Innengewindes bilden. Wird eine Gewindestange in den Aufnahmeraum eingesteckt, so drückt die Gewindestange in Einbringrichtung gegen die Spreizelemente, die um eine Kippachse kippen, wodurch der Aufnahmeraum freigegeben wird, sodass die Gewindestange in den Aufnahmeraum eingeführt werden kann. Dabei rasten die Rastelemente in die Gewindegänge der Gewindestange ein. Wird nun die Gewindestange entgegen der Einbringrichtung zurückbewegt, beispielsweise durch Aufbringen einer äußeren Last auf die Gewindestange, so kippen die Spreizelemente zurück, wodurch die Halteelemente gegen eine Bohrlochwand gepresst werden und ein Herausziehen der Gewindestange aus der Spreizhülse und ein Herausziehen des Spreizdübels aus dem Bohrloch verhindert wird.

Obwohl der bekannte Spreizdübel bereits eine gute Funktion und Leistungsfähigkeit aufweist, ist es Aufgabe der Erfindung, einen gattungsgemäßen Spreizdübel mit verbessertem Spreizverhalten zu schaffen.

Diese Aufgabe wird erfindungsgemäß durch einen Spreizdübel mit den Merkmalen des Anspruchs 1 gelöst.

Der erfindungsgemäße Spreizdübel umfasst eine Dübelhülse, die sich in axialer Richtung entlang einer Längsachse des Spreizdübels erstreckt. Die Dübelhülse weist einen Aufnahmeraum auf, der an dem in Einbringrichtung hinteren Ende der Dübelhülse offen ist, so dass ein Gewindeelement in Einbringrichtung in den Aufnahmeraum eingesteckt werden kann. Mit "Einbringrichtung" ist hier die Richtung gemeint, in die ein Gewindeelement planmäßig bei der Montage des Spreizdübels in den Aufnahmeraum der Dübelhülse eingebracht wird, um das Gewindeelement in der Dübelhülse des Spreizdübels zu befestigen. Die Bezeichnungen "vorne" und "hinten" beziehen sich im Weiteren auf die Einbringrichtung. Dabei befindet sich die Dübelhülse im Regelfall in einem Bohrloch, das in einen Verankerungsgrund, beispielsweise einer Wand aus Beton, gebohrt wurde. Das Gewindeelement ist insbesondere eine Gewindestange oder eine Schraube, insbesondere mit metrischem Außengewinde. Um zu verhindern, dass der Spreizdübel beim Einbringen des Gewindeelements in den Aufnahmeraum unbeabsichtigt mit dem Gewindeelement in das Bohrloch hinein bewegt wird, weist der Spreizdübel insbesondere an seinem hinteren Ende einen Bund auf, der mit der Dübelhülse verbunden ist, und radial über den Umfang der Dübelhülse übersteht.

Die Dübelhülse weist mindestens einen ersten Spreizsteg auf, der den Aufnahmeraum in radialer Richtung begrenzt und sich insbesondere in Längsrichtung des Spreizdübels erstreckt. Insbesondere ist der Aufnahmeraum durch mehrere, in Umfangsrichtung voneinander beabstandete und im Wesentlichen unabhängig voneinander in radialer Richtung bewegbare Spreizstege begrenzt. Die Spreizstege enden insbesondere jeweils an einer vorderen und einer hinteren Hülse des Spreizdübels. Insbesondere weist die Dübelhülse vier paarweise sich gegenüberliegende Spreizstege auf, wobei insbesondere sich gegenüberliegende Spreizstege den gleichen Querschnitt aufweisen. An dem mindestens einen Spreizsteg ist ein Spreizelement angeordnet, das radial außen ein Halteelement und radial innen ein Rastelement aufweist. Das Halteelement und das Rastelement ist jeweils ein radialer Vorsprung. Insbesondere bildet das Spreizelement mit seinem radial äußeren Ende, dem Halteelement, den radial äußeren Rand der Dübelhülse. Halteelement und/oder Rastelement können einstückig mit dem Spreizelement oder als Teile des Spreizelements ausgebildet sein. Das Spreizelement kann als Ganzes um eine Kippachse gegenüber der Längsachse gekippt werden. Die Kippachse liegt dabei im Wesentlichen in einer Radialebene zur Längsachse und ist insbesondere beabstandet zur Längsachse.

Das Halteelement dient zum Halten der Dübelhülse in einem Bohrloch, insbesondere durch reibschlüssigen Kontakt mit der Wand des Bohrlochs. Das Rastelement dient zum Eingriff in ein Gewinde eines sich in dem Aufnahmeraum befindlichen Gewindeelements. "Rastelement" meint hier, dass ein Einführen eines Gewindeelements ohne Drehung in Einbringrichtung möglich ist und dabei das Rastelement in das Gewinde des Gewindeelements eingreift und zwar derart, dass es einem Herausziehen entgegen der Einbringrichtung entgegenwirkt. Hierzu ragt das Rastelement in den Aufnahmeraum. Sowohl das Halteelement als auch das Rastelement kann aus einem oder mehreren Teilen bestehen. Das Halteelement ist insbesondere als eine von der Dübelhülse radial nach außen abstehende Rippe ausgebildet, die insbesondere an ihrem in Einbringrichtung vorderen Ende keilförmig abgeschrägt ist, wodurch ein Einführen der Dübelhülse in ein Bohrloch erleichtert wird. Das Halteelement weist insbesondere eine nutartige Schwächung auf, die insbesondere in Umfangsrichtung verläuft, wodurch am Halteelement mehrere Lamellen ausgebildet sind, die, im Gegensatz zu einer massiv ausgebildeten Rippe, relativ leicht verformbar sind. Das Rastelement umfasst insbesondere mehrere radial nach innen abstehende Flanken, die Teile eines Innengewindes bilden, das zu einem Außengewinde des Gewindeelements korrespondiert.

Um einen Spreizdübel zu schaffen, der in einem Bohrloch einen möglichst guten Halt findet, weist das Rastelement erfindungsgemäß einen kleineren Abstand zum hinteren Ende der Dübelhülse auf, als das Halteelement. Dies bewirkt, dass das Spreizelement beim Einführen eines zum Aufnahmeraum korrespondierenden Gewindeelements in den Aufnahmeraum so gekippt wird, dass zunächst der, bezogen auf die Kippachse hintere, der Einführöffnung zugewandte Teil des Spreizelements radial nach außen bewegt wird und erst beim weiteren Einführen des Gewindeelements in den Aufnahmeraum der vordere Teil des Spreizelements durch ein Zurückkippen ebenfalls radial nach außen bewegt und das Spreizelement als Ganzes gegen die Bohrlochwand gepresst wird. Durch dieses Vor- und Zurückkippen wird das Spreizelement als Ganzes radial nach außen bewegt, wobei sich das Halteelement aufgrund der Kippbewegungen gut an Unebenheiten der Bohrlochwand anpassen und gegebenenfalls in diese eingreifen kann, wodurch der Halt zwischen Halteelement und Bohrlochwand stark verbessert wird. Im Gegensatz zu dem aus dem Stand der Technik bekannten Spreizdübel wird das Spreizelement nicht erst beim Ziehen an dem Gewindeelement verstärkt gegen die Bohrlochwand gepresst, sondern bereits beim Einführen des Gewindeelements in den Aufnahmeraum.

Vorzugsweise ist das Rastelement an seinem hinteren Ende, das dem hinteren Ende der Dübelhülse zugewandt ist, keilförmig, derart, dass der Abstand des Rastelements zur Längsachse in Einbringrichtung eines Gewindeelements in den Aufnahmeraum abnimmt. Sind mehrere Spreizelemente vorhanden, so ist insbesondere jedes der Rastelemente keilförmig. Mit "keilförmig" ist hier nicht zwingend eine geradlinige oder kontinuierliche Zunahme gemeint, auch wenn dies bevorzugt ist, sondern beispielsweise auch eine gekrümmte Form. Aufgrund dieser Ausgestaltung des Rastelements wird das Einführen des Gewindeelements in den Aufnahmeraum und das Kippen des Spreizelements beim Einführen des Gewindeelements erleichtert.

Weiterhin ist bevorzugt, dass die axiale Erstreckung des Rastelements größer als die axiale Erstreckung des Halteelements ist. Aufgrund der aus den unterschiedlichen axialen Erstreckungen resultierenden Hebelarme von Halte- und Rastelement wird das Anpressen des Halteelements gegen die Bohrlochwand beim Einführen des Gewindeelements verbessert. Eine weitere Verbesserung ist möglich, wenn das Rastelement in axialer Richtung vor dem Halteelement beginnt und hinter dem Halteelement endet.

Erfindungsgemäß sind an einem Spreizsteg insbesondere mehrere Spreizelemente in Längsrichtung hintereinander angeordnet. Insbesondere sind Spreizelemente, die in Längsrichtung hintereinander an einem Spreizsteg angeordnet sind, miteinander verbunden, insbesondere an den einander zugewandten Enden.

Bei einer weiteren bevorzugten Ausgestaltungsform des erfindungsgemäßen Spreizdübels sind an einem Spreizsteg mindestens zwei in axialer Richtung voneinander beabstandete Spreizelemente angeordnet, und der die beiden Spreizelemente verbindende Teil des Spreizstegs weist zumindest abschnittsweise einen reduzierten Querschnitt, insbesondere eine in radialer Richtung reduzierte Dicke auf. Der Spreizsteg wird hierdurch leichter verformbar und der Widerstand des Spreizstegs gegen ein Kippen eines Spreizelements wird verringert.

Weiterhin ist bevorzugt, dass an einem Spreizsteg mindestens zwei in axialer Richtung voneinander beabstandete Spreizelemente angeordnet sind, die in radialer Richtung unterschiedlich weit über die Längsachse überstehen. Dies erleichtert das Einführen der Spreizhülse des Spreizdübels in ein Bohrloch und gibt der Spreizhülse im Bohrloch genügend Beweglichkeit, um Unebenheiten der Wand des Bohrloches beim Einführen eines Gewindeelements in den Aufnahmeraum ausgleichen zu können, ohne dass der Widerstand, mit dem die Spreizelemente dem Gewindeelement beim Einbringen entgegenwirken, so groß wird, dass Spreizelemente beschädigt werden, beispielsweise indem Teile des Rastelements vom restlichen Spreizelement abscheren.

Bei einer weiteren bevorzugten Ausgestaltungsform weist der Spreizdübel einen zweiten Spreizsteg auf, der in einem Spreizabschnitt, der sich insbesondere in einem vorderen, dem hinteren Ende der Dübelhülse abgewandten Bereich des Aufnahmeraums befindet, keilförmig ist, derart, dass der Abstand des Spreizstegs zur Längsachse in Einbringrichtung eines Gewindeelements in den Aufnahmeraum abnimmt. Insbesondere weist dieser Spreizsteg kein Spreizelement auf. Durch den keilförmigen Spreizabschnitt wird der zweite Spreizsteg zusätzlich radial nach außen gedrückt, wenn das Gewindeelement beim Einführen in den Aufnahmeraum in den Bereich des Spreizabschnitts gelangt, wodurch sich der Halt der Dübelhülse im Bohrloch weiter erhöht. Dabei verhindert das Zusammenwirken des Spreizelements des ersten Spreizstegs mit dem keilförmigen Spreizbereich, dass beim Aufbringen einer Zuglast auf das Gewindeelement das Gewindeelement aus dem keilförmigen Spreizbereich und die Dübelhülse aus dem Bohrloch herausgezogen wird. Dabei ist bevorzugt, dass die Dübelhülse in einem unverspreizten Zustand, also vor dem Einführen des Gewindeelements in den Aufnahmeraum, im Bereich des zweiten Spreizstegs einen kleineren Außendurchmesser aufweist als im Bereich des ersten Spreizstegs. Die Dübelhülse lässt sich aufgrund dieser Ausgestaltung auch in ein unebenes Bohrloch ohne großen Kraftaufwand einstecken, wobei durch die oben erwähnte Ausbildung des keilförmigen Spreizabschnitts nach dem Einführen des Gewindeelements auch der zweite Spreizsteg zum Halt der Spreizhülse im Bohrloch beiträgt. Insbesondere weist die Dübelhülse zwei erste Spreizstege und zwei zweite Spreizstege auf, die paarweise einander gegenüberliegend an der Dübelhülse angeordnet sind. Die Dübelhülse weist dann im unverspreizten Zustand im Bereich der beiden ersten Spreizstege einen größeren Durchmesser auf als im Bereich der beiden zweiten Spreizstege.

Weist der erfindungsgemäße Spreizdübel mehrere Spreizstege auf, die in Umfangsrichtung voneinander beabstandet sind, so sind die Spreizstege vorzugsweise in Umfangsrichtung durch Verbindungsstege miteinander verbunden, wobei die Verbindungstege, die von einem Spreizsteg in entgegengesetzte Umfangsrichtungen abstehen, in Längsrichtung zueinander axial versetzt sind. Der Versatz ist insbesondere größer, als die axiale Erstreckung eines der Verbindungsstege. Der Versatz der Verbindungsstege verbessert die Verformbarkeit des Spreizdübels in Umfangsrichtung.

Vorzugsweise weist der Spreizdübel an seinem in Einbringrichtung vorderen Ende eine Deckplatte auf, die den Aufnahmeraum an seinem vorderen Ende begrenzt. Die Deckplatte ist mit zumindest einem Spreizsteg über eine Solltrennstelle verbunden, sodass die Deckplatte vom Spreizsteg abgetrennt wird, wenn das Gewindeelement zu weit in den Aufnahmeraum eingeführt und zu stark gegen die Deckplatte gedrückt wird. Hierdurch wird verhindert, dass der Spreizdübel unkontrolliert an einer undefinierten Stelle versagt, beispielsweise in der Mitte eines Spreizstegs, was zu einem kompletten Versagen der Befestigungsanordnung von Spreizdübel und Gewindeelement führen würde. Die Deckplatte hat vor dem vollständigen Einführen des Gewindeelements eine stabilisierende Funktion für die Spreizhülse und verhindert, dass beim Einführen der Spreizhülse in ein Bohrloch eine größere Menge Bohrmehl oder Staub in den Aufnahmeraum gelangt, was ein Einführen des Gewindeelements in den Aufnahmeraum behindern würde. Nach dem Einführen der Dübelhülse in das Bohrloch und dem Einführen des Gewindeelements in den Aufnahmeraum kann die Deckplatte abgetrennt werden, ohne dass ein Spreizelement und/oder ein Spreizbereich eines Spreizstegs seine Wirkung verliert.

Die Erfindung wird nachfolgend anhand eines in den Figuren dargestellten Ausführungsbeispiels näher erläutert.

Es zeigen:
- Figur 1: einen erfindungsgemäßen Spreizdübel mit eingeführtem Gewindeelement in einer Seitenansicht;
- Figur 2a: eine vergrößerte Darstellung eines Spreizelements des Spreizdübels (Detail II der Figur 1) beim Einführen eines Gewindeelements;
- Figur 2b: eine vergrößerte Darstellung des Spreizelements der Figur 2a nach dem Einführen des Gewindeelements;
- Figur 3: eine gegenüber der Figur 1 um 90° gedrehte Seitenansicht des Spreizdübels;
- Figur 4: eine Ansicht des erfindungsgemäßen Spreizdübels in Einbringrichtung in den Aufnahmeraum hinein; und
- Figur 5: eine perspektivische Ansicht des erfindungsgemäßen Spreizdübels von hinten, also in Einbringrichtung gesehen.

In den Figuren ist ein erfindungsgemäßer Spreizdübel 1 dargestellt, der eine Dübelhülse 2 und einen Bund 3 umfasst. Die Dübelhülse 2 erstreckt sich in axialer Richtung entlang einer Längsachse L von einem in Einbringrichtung E vorderen Ende 4 bis zu einem hinteren Ende 5, das mit dem Bund 3 einstückig verbunden ist. Der Bund 3 steht in radialer Richtung r über die Dübelhülse 2 über und dient als Widerlager zur Anlage am Verankerungsgrund, in dem die Dübelhülse in einem Bohrloch (nicht dargestellt) verankert wird, das verhindert, dass die Dübelhülse 2 tiefer das Bohrloch gesteckt werden kann, als dies planmäßig vorgesehen ist. Die Dübelhülse 2 umfasst vier paarweise angeordnete und sich axial parallel zur Längsachse L erstreckende Spreizstege 6a, 6b, 7a, 7b, die einen Aufnahmeraum 8 für ein Gewindeelement 9 in radialer Richtung r begrenzen. Der Aufnahmeraum 8 ist an dem in Einbringrichtung E hinteren Ende 5 der Dübelhülse 2 offen, derart, dass das Gewindeelement 9, im Ausführungsbeispiel eine Gewindestange mit metrischem Außengewinde, in Einbringrichtung E in den Aufnahmeraum 8 eingesteckt werden kann. Der Aufnahmeraum 8 wird an seinem vorderen Ende durch eine flächig geschlossene kreisförmige Deckplatte 10 begrenzt, die das vordere Ende 4 der Dübelhülse 2 bildet.

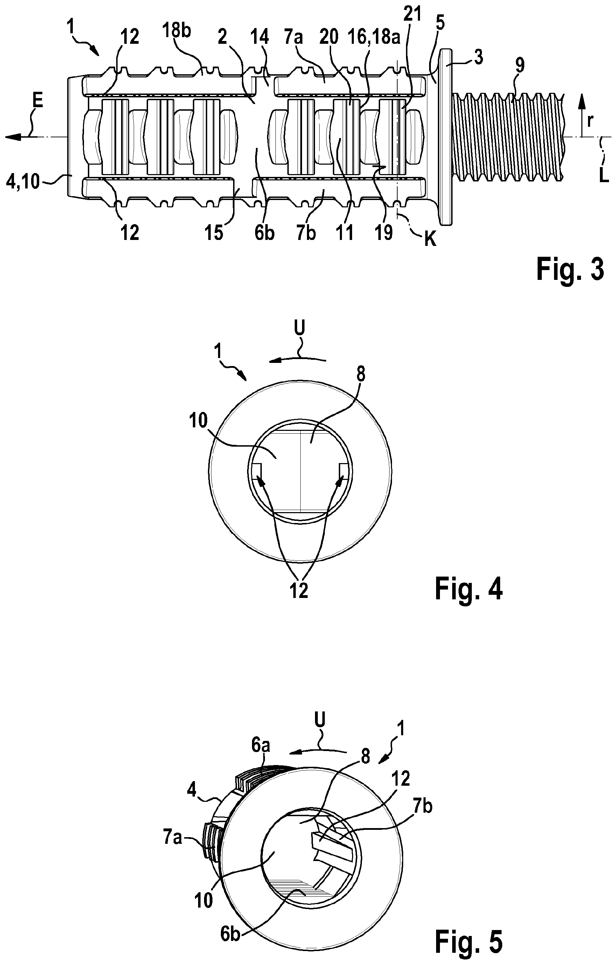

Die Spreizstege 6a, 6b, 7a, 7b sind paarweise sich gegenüberliegend angeordnet, wobei zwei sich gegenüberliegende erste Spreizstege 6a, 6b Spreizelemente 11 aufweisen, die in den Aufnahmeraum 8 als Teile eines zum Außengewinde des Gewindeelements 9 korrespondierenden Innengewindes als Vorsprünge hineinragen, während die anderen zwei sich gegenüberliegenden zweiten Spreizstege 7a, 7b nur in ihren in Einbringrichtung E vorderen Abschnitten Spreizabschnitte 12 aufweisen, die keilförmig sind, derart, dass der Abstand der zweiten Spreizstege 7a, 7b zur Längsachse L in Einbringrichtung E des Gewindeelements 9 in den Aufnahmeraum 8 abnimmt (siehe insbesondere Figur 5). Die ersten Spreizstege 6a, 6b und die zweiten Spreizstege 7a, 7b sind zueinander in Umfangsrichtung U um jeweils 90° versetzt angeordnet. In Umfangsrichtung U benachbarte Spreizstege 6a, 6b, 7a, 7b sind ungefähr in der axialen Mitte des Spreizdübels 1 durch vier Verbindungsstege verbunden, von denen in den Figuren nur drei Verbindungsstege 13, 14, 15 sichtbar sind. Jeweils zwei Verbindungsstege 13, 14, 15, die von einem der Spreizstege 6a, 6b, 7a, 7b einander entgegen gerichtet in und entgegen der Umfangsrichtung U abstehen, sind zueinander axial versetzt, sodass ihr axialer Abstand zum hinteren Ende 5 der Dübelhülse 2 verschieden groß ist. Der axiale Versatz der Verbindungsstege 13, 14, 15 ermöglicht, dass der Spreizdübel 1 im Bereich der Verbindungsstege 13, 14, 15 von den Verbindungsstegen 13, 14, 15 in radialer Richtung ausgesteift wird, wobei der Spreizdübel 1 durch den Versatz trotzdem im Bereich der Verbindungsstege 13, 14, 15 radial zusammengedrückt werden kann, so dass die Dübelhülse 2 auch in diesem Bereich beweglich ist und sich an eine Wand eines Bohrlochs anpassen kann. Die radial äußeren Enden der zweiten Spreizstege 7a, 7b weisen in einem ungespreizten Zustand (nicht dargestellt) eine radiale Ausdehnung auf, die kleiner als die radiale Ausdehnung der ersten Spreizstege 6a, 6b ist, sodass die Dübelhülse 2 im ungespreizten Zustand im Bereich der zweiten Spreizstege 7a, 7b einen kleineren Außendurchmesser aufweist als im Bereich der ersten Spreizstege 6a, 6b. Auch hierdurch wird die Anpassungsfähigkeit der Dübelhülse 2 an die Wand eines Bohrlochs verbessert und das Einführen der Dübelhülse 2 in ein Bohrloch vereinfacht.

An den ersten Spreizstegen 6a, 6b sind die Spreizelemente 11 angeordnet. Jeweils ein Spreizelement 11 weist ein Halteelement 16 und ein Rastelement 17 auf. Das Halteelement 16 befindet sich radial außen am Spreizelement 11 und dient zum Halten der Dübelhülse 2 in einem Bohrloch, indem es die Dübelhülse 2 reibschlüssig an einer Wand eines Bohrlochs hält. Das Halteelement 16 ist als Rippe 18a ausgeführt, die an ihrem vorderen Ende eine Keilfläche 19 aufweist, die ein Einführen der Dübelhülse 2 in ein Bohrloch erleichtert. Die Rippe 18a weist zudem eine in Umfangsrichtung U verlaufende nutartige Schwächung 20 auf, die die Rippe 18a in zwei Lamellen 21 unterteilt, die leicht verformbar sind und sich gut an eine Bohrlochwand anpassen können. Das Rastelement 17 ragt zum Eingriff in das Außengewinde des Gewindeelements 9 in den Aufnahmeraum 8 hinein und besteht aus drei Flanken 22, die Teile eines zum Außengewinde des Gewindeelements 9 korrespondierenden Innengewindes bilden. Jedes der Rastelemente 17 der Spreizelemente 11 weist einen kleineren Abstand zum hinteren Ende 5 der Dübelhülse 2 auf, als das Halteelement 16 des jeweiligen Spreizelements 11. Zudem sind die Rastelemente 17 an ihren dem hinteren Ende 5 der Dübelhülse 2 zugewandten Enden 23 keilförmig, derart, dass der Abstand des Rastelements 17 zur Längsachse L in Einbringrichtung E des Gewindeelements 9 in den Aufnahmeraum 8 abnimmt. Weiterhin ist die axiale Erstreckung der Rastelemente 17 größer als die axiale Erstreckung der zu einem Spreizelement 11 zugehörigen Halteelemente 16, sodass das Rastelement 17 in axialer Richtung vor dem Halteelement 16 beginnt und hinter dem Halteelement 16 endet. An den ersten Spreizstegen 6a, 6b sind jeweils sechs in axialer Richtung voneinander beabstandete Spreizelemente 11 angeordnet, wobei jeweils das zweite und das fünfte Spreizelement 11, bezogen auf die Längsachse L, nicht so weit radial nach außen steht, wie die anderen Spreizelemente 11, was das Einbringen der Dübelhülse 2 in ein Bohrloch erleichtert. In den Bereichen zwischen den Spreizelementen 11 sind die ersten Spreizstege 6a, 6b in ihrer Dicke reduziert. In diesem Bereich ist die Dicke der ersten Spreizstege 6a, 6b geringer, als im Bereich der Verbindungsstege 13, 14, 15, wodurch die Stege im Bereich der Spreizelemente 11 biegsamer und beweglicher sind und damit ein Kippen der Spreizelemente 11 beim Einführen des Gewindeelements 9 in den Aufnahmeraum 8 erleichtern. An der Verbindungsstelle zwischen der Deckplatte 10 und den ersten Spreizstegen 6a, 6b ist die Dicke der ersten Spreizstege 6a, 6b ebenfalls reduziert, so dass hier eine Solltrennstelle 24 entsteht, an der die Deckplatte 10 von den ersten Spreizstegen 6a, 6b abgetrennt werden kann, falls ein Anwender das Gewindeelement 9 zu weit und/oder mit zu viel Kraft in den Aufnahmeraum 8 einsteckt oder einschlägt, so dass die ersten Spreizstege 6a, 6b im Bereich der Spreizelemente 11 nicht beschädigt werden. Die zweiten Spreizstege 7a, 7b weisen über ihre axiale Länge eine konstante Dicke auf, die größer als die reduzierte Dicke der ersten Spreizstege 6a, 6b ist. An den zweiten Spreizstegen 7a, 7b sind ebenfalls Rippen 18b angeordnet, die im Querschnitt den Rippen 18a der ersten Spreizstege 6a, 6b entsprechen. Allerdings weisen die zweiten Spreizstege 7a, 7b keine Rastelemente auf, sodass an den zweiten Spreizstegen 7a, 7b keine Spreizelemente vorhanden sind.

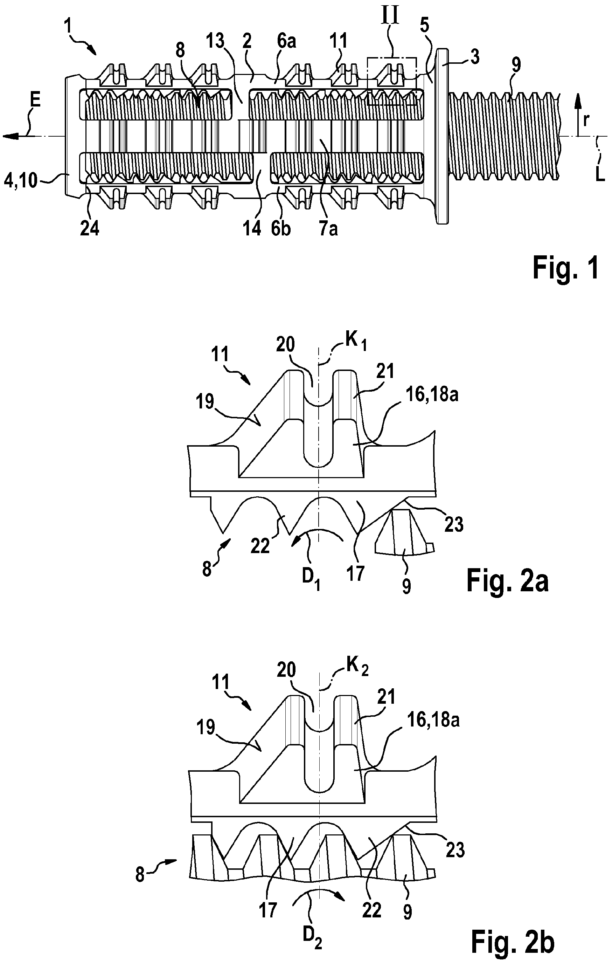

Die Figuren 1 und 3 zeigen den Spreizdübel 1 mit dem zum Aufnahmeraum 8 korrespondierenden Gewindeelement 9, das planmäßig in den Aufnahmeraum 8 zwischen die Spreizstege 6a, 6b, 7a, 7b eingebracht ist. Wie in Figur 2a zu sehen ist, trifft das Gewindeelement 9 beim Einbringen in den Aufnahmeraum 8 im Bereich der Spreizelemente 11 zunächst auf das keilförmige hintere Ende 23 des Rastelements 17, wodurch das Spreizelement 11 im Wesentlichen als Ganzes um eine erste Kippachse K₁ in eine erste Drehrichtung D₁ kippt und ein hinterer Teil des Halteelements 16 radial nach außen bewegt und gegen eine Wand eines Bohrlochs gepresst wird. Beim weiteren Einbringen des Gewindeelements 9 in den Aufnahmeraum 8 wird dann auch der in Einbringrichtung E vordere Teil des Halteelements 16 nach außen gepresst, wodurch das Spreizelement 11 um eine zweite Kippachse K₂, die mit der ersten Kippachse K₁ identisch sein kann, in eine zweite Drehrichtung D₂, die der ersten Drehrichtung D₁ im Wesentlichen entgegengesetzt ist, zurückkippt, sodass das gesamte Halteelement 16 flächig an der Bohrlochwand anliegt. Im vorderen Bereich des Aufnahmeraums 8 trifft das Gewindeelement 9 auf die beiden keilförmigen Spreizabschnitte 12, die in den Aufnahmeraum 8 ragen, wodurch die zweiten Spreizstege 7a, 7b radial nach außen, gegen eine nicht dargestellte Bohrlochwand, gespreizt werden. Die Kombination der kippbaren Spreizelemente 11 der ersten Spreizstege 6a, 6b mit den radial spreizenden Spreizabschnitten 12 der zweiten Spreizstege 7a, 7b, die erst am Ende des Einführens des Gewindeelements 9 in den Aufnahmeraum 8 gespreizt werden, führt zu einem sehr guten Halt der Dübelhülse 2 in einem Bohrloch.

### Bezugszeichenliste

- 1: Spreizdübel
- 2: Dübelhülse
- 3: Bund
- 4: vorderes Ende der Dübelhülse 2
- 5: hinteres Ende der Dübelhülse 2
- 6a, 6b: erster Spreizsteg
- 7a, 7b: zweiter Spreizsteg
- 8: Aufnahmeraum
- 9: Gewindeelement
- 10: Deckplatte
- 11: Spreizelement
- 12: Spreizabschnitt
- 13: erster Verbindungssteg
- 14: zweiter Verbindungssteg
- 15: dritter Verbindungssteg
- 16: Halteelement
- 17: Rastelement
- 18a: Rippe der ersten Spreizstege 6a, 6b
- 18b: Rippe der zweiten Spreizstege 7a, 7b
- 19: Keilfläche der Rippe 18a, 18b
- 20: nutartige Schwächung der Rippe 18a, 18b
- 21: Lamelle der Rippe 18a, 18b
- 22: Flanke des Rastelements 17
- 23: hinteres Ende des Rastelements 17
- 24: Solltrennstelle
- D₁: erste Drehrichtung
- D₂: zweite Drehrichtung
- E: Einbringrichtung
- K₁: erste Kippachse
- K₂: zweite Kippachse
- L: Längsachse
- r: radiale Richtung
- U: Umfangsrichtung

## Patentansprüche

1. Spreizdübel (1) mit einer Dübelhülse (2), die sich in axialer Richtung entlang einer Längsachse (L) erstreckt und die einen Aufnahmeraum (8) aufweist, der an dem in Einbringrichtung (E) hinteren Ende (5) der Dübelhülse (2) offen ist, so dass ein Gewindeelement (9) in Einbringrichtung (E) in den Aufnahmeraum (8) eingesteckt werden kann, wobei die Dübelhülse (2) mindestens einen ersten Spreizsteg (6a, 6b) aufweist, der den Aufnahmeraum (8) in radialer Richtung (r) begrenzt und an dem mindestens ein Spreizelement (11) angeordnet ist, wobei das Spreizelement (11) ein Halteelement (16) zum Halten der Dübelhülse (2) in einem Bohrloch und ein Rastelement (17) aufweist, das zum Eingriff in ein Gewinde eines Gewindeelements (9) in den Aufnahmeraum (8) ragt, wobei das Rastelement (17) und das Halteelement (16) aus einem oder mehreren Teilen besteht und das Spreizelement (11) als Ganzes um eine Kippachse (K) gegenüber der Längsachse (L) kippbar ist, die im Wesentlichen in einer Radialebene zur Längsachse (L) liegt, **dadurch gekennzeichnet, dass** das Rastelement (17) einen kleineren Abstand zum hinteren Ende (5) der Dübelhülse (2) aufweist, als das Halteelement (16).

2. Spreizdübel nach Anspruch 1, **dadurch gekennzeichnet, dass** das Rastelement (17) an seinem dem hinteren Ende (5) der Dübelhülse (2) zugewandten Ende (23) keilförmig ist, derart, dass der Abstand des Rastelements (17) zur Längsachse (L) in Einbringrichtung (E) eines Gewindeelements (9) in den Aufnahmeraum (8) abnimmt.

3. Spreizdübel nach Anspruch 1 oder Anspruch 2, **dadurch gekennzeichnet, dass** die axiale Erstreckung des Rastelements (17) größer als die axiale Erstreckung des Halteelements (16) ist.

4. Spreizdübel nach einem der Ansprüche 1 bis 3, **dadurch gekennzeichnet, dass** das Rastelement (17) in axialer Richtung vor dem Halteelement (16) beginnt und hinter dem Halteelement (16) endet.

5. Spreizdübel nach einem der Ansprüche 1 bis 4, **dadurch gekennzeichnet, dass** an einem Spreizsteg (6a, 6b) mindestens zwei in axialer Richtung voneinander beabstandete Spreizelemente (11) angeordnet sind, und der die Spreizelemente (11) verbindende Teil des Spreizstegs (6a, 6b) zumindest abschnittsweise einen reduzierten Querschnitt aufweist.

6. Spreizdübel nach einem der Ansprüche 1 bis 5, **dadurch gekennzeichnet, dass** an einem Spreizsteg (6a, 6b) mindestens zwei in axialer Richtung voneinander beabstandete Spreizelemente (11) angeordnet sind, die in radialer Richtung (r) unterschiedlich weit über die Längsachse (L) überstehen.

7. Spreizdübel nach einem der Ansprüche 1 bis 6, **dadurch gekennzeichnet, dass** der Spreizdübel (1) einen zweiten Spreizsteg (7a, 7b) aufweist, der in einem Spreizabschnitt (12) keilförmig ist, derart, dass der Abstand des Spreizstegs (7a, 7b) zur Längsachse (L) in Einbringrichtung (E) eines Gewindeelements (9) in den Aufnahmeraum (8) abnimmt.

8. Spreizdübel nach Anspruch 7, **dadurch gekennzeichnet, dass** die Dübelhülse (2) im Bereich des zweiten Spreizstegs (7a, 7b) einen kleineren Außendurchmesser aufweist als im Bereich des ersten Spreizstegs (6a, 6b).

9. Spreizdübel nach einem der Ansprüche 1 bis 8, **dadurch gekennzeichnet, dass** der Spreizdübel (1) mehrere Spreizstege (6a, 6b, 7a, 7b) aufweist, die in Umfangsrichtung (U) durch Verbindungsstege (13, 14, 15) verbunden sind, die zueinander axial versetzt sind.

10. Spreizdübel nach einem der Ansprüche 1 bis 9, **dadurch gekennzeichnet, dass** der Spreizdübel (1) eine Deckplatte (10) aufweist, die den Aufnahmeraum (8) an seinem vorderen Ende begrenzt, und dass zumindest ein Spreizsteg (6a, 6b) über eine Solltrennstelle (24) mit der Deckplatte (10) verbunden ist.

## Claims

1. Expansible fixing plug (1) having a fixing plug sleeve (2) which extends in an axial direction along a longitudinal axis (L) and has a receiving space (8) which is open at the end (5) of the fixing plug sleeve (2) that is at the rear in the direction of introduction (E) so that a threaded element (9) can be inserted into the receiving space (8) in the direction of introduction (E), wherein the fixing plug sleeve (2) has at least one first expansion rib (6a, 6b) which delimits the receiving space (8) in the radial direction (r) and on which there is arranged at least one expansion element (11), the expansion element (11) having a holding element (16) for holding the fixing plug sleeve (2) in a drilled hole and a locking element (17) which projects into the receiving space (8) for engagement in a thread of a threaded element (9), wherein the locking element (17) and the holding element (16) consist of one or more parts and the expansion element (11) as a whole is tiltable with respect to the longitudinal axis (L) about a tilt axis (K) which lies substantially in a radial plane relative to the longitudinal axis (L), **characterised in that** the locking element (17) is spaced a smaller distance from the rear end (5) of the fixing plug sleeve (2) than is the holding element (16).

2. Expansible fixing plug according to claim 1, **characterised in that** the locking element (17) is wedge-shaped at its end (23) facing towards the rear end (5) of the fixing plug sleeve (2) such that the spacing of the locking element (17) from the longitudinal axis (L) decreases in the direction of introduction (E) of a threaded element (9) into the receiving space (8).

3. Expansible fixing plug according to claim 1 or claim 2, **characterised in that** the axial extent of the locking element (17) is greater than the axial extent of the holding element (16).

4. Expansible fixing plug according to any one of claims 1 to 3, **characterised in that** the locking element (17) begins before the holding element (16) and ends after the holding element (16) in the axial direction.

5. Expansible fixing plug according to any one of claims 1 to 4, **characterised in that** on an expansion rib (6a, 6b) there are arranged at least two expansion elements (11) which are spaced apart from one another in the axial direction, and the part of the expansion rib (6a, 6b) connecting the expansion elements (11) has, at least in some portions, a reduced cross-section.

6. Expansible fixing plug according to any one of claims 1 to 5, **characterised in that** on an expansion rib (6a, 6b) there are arranged at least two expansion elements (11) which are spaced apart from one another in the axial direction, which expansion elements project beyond the longitudinal axis (L) to different extents in the radial direction (r).

7. Expansible fixing plug according to any one of claims 1 to 6, **characterised in that** the expansible fixing plug (1) has a second expansion rib (7a, 7b) which, in an expansion portion (12), is wedge-shaped such that the spacing of the expansion rib (7a, 7b) from the longitudinal axis (L) decreases in the direction of introduction (E) of a threaded element (9) into the receiving space (8).

8. Expansible fixing plug according to claim 7, **characterised in that** the fixing plug sleeve (2) has a smaller external diameter in the region of the second expansion rib (7a, 7b) than in the region of the first expansion rib (6a, 6b).

9. Expansible fixing plug according to any one of claims 1 to 8, **characterised in that** the expansible fixing plug (1) has a plurality of expansion ribs (6a, 6b, 7a, 7b) which are connected in the circumferential direction (U) by connecting ribs (13, 14, 15) that are offset relative to one another axially.

10. Expansible fixing plug according to any one of claims 1 to 9, **characterised in that** the expansible fixing plug (1) has a cover plate (10) which delimits the receiving space (8) at its front end, and at least one expansion rib (6a, 6b) is connected to the cover plate (10) via a predetermined breaking point (24).

## Revendications

1. Cheville à expansion (1) avec une douille de cheville (2) qui s'étend dans la direction axiale le long d'un axe longitudinal (L) et qui présente un espace de réception (8) ouvert à l'extrémité arrière (5) de la douille de cheville (2) dans la direction d'insertion (E), de sorte qu'un élément fileté (9) peut être inséré dans l'espace de réception (8) dans la direction d'insertion (E), la douille de cheville (2) présentant au moins une première nervure d'expansion (6a, 6b) qui délimite l'espace de réception (8) dans la direction radiale (r) et sur laquelle est disposé au moins un élément d'expansion (11), l'élément d'expansion (11) présentant un élément de maintien (16) pour maintenir la douille de cheville (2) dans un trou de forage et un élément d'encliquetage (17) qui fait saillie dans l'espace de réception (8) pour venir en prise avec un filetage d'un élément fileté (9), l'élément d'encliquetage (17) et l'élément de maintien (16) étant constitués d'une ou de plusieurs parties et l'élément d'expansion (11) dans son ensemble pouvant basculer autour d'un axe de basculement (K) par rapport à l'axe longitudinal (L), qui se trouve sensiblement dans un plan radial par rapport à l'axe longitudinal (L), **caractérisée en ce que** l'élément d'encliquetage (17) présente une distance plus faible par rapport à l'extrémité arrière (5) de la douille de cheville (2) que l'élément de maintien (16).

2. Cheville à expansion selon la revendication 1, **caractérisée en ce que** l'élément d'encliquetage (17) est cunéiforme à son extrémité (23) tournée vers l'extrémité arrière (5) de la douille de cheville (2), de telle sorte que la distance de l'élément d'encliquetage (17) par rapport à l'axe longitudinal (L) diminue dans la direction d'insertion (E) d'un élément fileté (9) dans l'espace de réception (8).

3. Cheville à expansion selon la revendication 1 ou la revendication 2, **caractérisée en ce que** l'extension axiale de l'élément d'encliquetage (17) est supérieure à l'extension axiale de l'élément de maintien (16).

4. Cheville à expansion selon l'une des revendications 1 à 3, **caractérisée en ce que** l'élément d'encliquetage (17) commence dans la direction axiale devant l'élément de maintien (16) et se termine derrière l'élément de maintien (16).

5. Cheville à expansion selon l'une des revendications 1 à 4, **caractérisée en ce qu'**au moins deux éléments d'expansion (11) espacés l'un de l'autre dans la direction axiale sont disposés sur une nervure d'expansion (6a, 6b), et la partie de la nervure d'expansion (6a, 6b) qui relie les éléments d'expansion (11) présente une section transversale réduite au moins sur certaines parties.

6. Cheville à expansion selon l'une des revendications 1 à 5, **caractérisée en ce qu'**au moins deux éléments d'expansion (11) espacés l'un de l'autre dans la direction axiale sont disposés sur une nervure d'expansion (6a, 6b) et dépassent de l'axe longitudinal (L) à des degrés différents dans la direction radiale (r).

7. Cheville à expansion selon l'une des revendications 1 à 6, **caractérisée en ce que** la cheville à expansion (1) présente une deuxième nervure d'expansion (7a, 7b) qui est cunéiforme dans une partie d'expansion (12), de telle sorte que la distance de la nervure d'expansion (7a, 7b) par rapport à l'axe longitudinal (L) diminue dans la direction d'insertion (E) d'un élément fileté (9) dans l'espace de réception (8).

8. Cheville à expansion selon la revendication 7, **caractérisée en ce que** la douille de cheville (2) présente dans la zone de la deuxième nervure d'expansion (7a, 7b) un diamètre extérieur plus petit que dans la zone de la première nervure d'expansion (6a, 6b).

9. Cheville à expansion selon l'une des revendications 1 à 8, **caractérisée en ce que** la cheville à expansion (1) présente plusieurs nervures d'expansion (6a, 6b, 7a, 7b) qui sont reliées dans la direction circonférentielle (U) par des nervures de liaison (13, 14, 15) qui sont décalées axialement les unes par rapport aux autres.

10. Cheville à expansion selon l'une des revendications 1 à 9, **caractérisée en ce que** la cheville à expansion (1) présente une plaque de recouvrement (10) qui délimite l'espace de réception (8) à son extrémité avant, et qu'au moins une nervure d'expansion (6a, 6b) est reliée à la plaque de recouvrement (10) par l'intermédiaire d'un point destiné à la rupture (24).
